# EUROPÄISCHE PATENTSCHRIFT

(11) **EP 1 950 994 B1**
(45) Veröffentlichungstag und Bekanntmachung des Hinweises auf die Patenterteilung: **17.03.2010**
(21) Anmeldenummer: 08001358.4
(22) Anmeldetag: 24.01.2008
(51) Int. Cl.: H04W 24/00

(54) **Verfahren und System zum Verbindungsaufbau eines Mobiltelefons mit einer Mess-Basisstation**
Method and system for creating a connection between a mobile telephone and a measuring base station
Dispositif et procédé destinés à l' établissement de connexion d'un téléphone mobile à une station de base de mesure

(30) Priorität: 26.01.2007 DE 102007004121
(43) Veröffentlichungstag der Anmeldung: 30.07.2008
(73) Patentinhaber: Rohde & Schwarz GmbH & Co. KG, 81671 München (DE)
(72) Erfinder: Pauli, Mathias, Dr., 85375 Neufahrn (DE)
(74) Vertreter: Körfer, Thomas

(56) Entgegenhaltungen:
- WO-A-00/76241
- WO-A-98/44748
- WO-A-2007/022811
- DE-A1- 10 051 129
- MOULY / PAUTET: "The GSM system for mobile communications" August 1993 (1993-08), CELL&SYS , PALAISEAU (FRANCE) , XP002482986 * Seiten 330-331 *

## Beschreibung

Die Erfindung betrifft ein Verfahren zum gezielten Verbindungsaufbau eines ausgewählten Ziel-Mobiltelefons mit einer Mess-Basisstation.

In der Praxis besteht das Bedürfnis, für Messzwecke ein bestimmtes Mobiltelefon isoliert vom sonstigen Mobilfunkbetrieb einer Mess-Basisstation zuzuführen, so dass die Mess-Basisstation an diesem ausgewählten Ziel-Mobiltelefon bestimmte Messungen durchführen kann. Dies ist beispielsweise notwendig, wenn ein bestimmtes Mobiltelefon im Betrieb ein auffälliges Verhalten zeigt, welches den ordnungsgemäßen Ablauf des Mobilfunkbetriebs stört. Es ist dann sinnvoll, bestimmte Funktionen des Mobiltelefons getrennt vom normalen Netzbetrieb zu überprüfen, um bei Nichterfüllung der standardgemäßen Spezifikationen das Mobiltelefon vom Netzbetrieb ausschließen zu können. Lediglich zum technologischen Hintergrund sei auf die DE 100 51 129 A1 hingewiesen, aus der jedoch kein Betrieb einer Mess-Basisstation unabhängig vom Netzbetrieb hervorgeht, sondern lediglich ein Verfahren zum unbemerkten Aktivieren eines Mobiltelefons.

Die am 1.03.2007 veröffentlichte PCT-Anmeldung WO 2007/022811 A1 beansprucht die Priorität vom 23.08.2005. WO 2007/022811 A1 offenbart ein Verfahren zum Verbindungsaufbau eines ausgewählten Ziel-Mobiltelefons mit einer Ziel-Basisstation durch Aktivieren einer Kontroll-Basisstation auf der ursprünglichen Frequenz des Ziel-Mobiltelefons.

Der Erfindung liegt die Aufgabe zugrunde, ein Verfahren und ein System zum Verbindungsaufbau eines ausgewählten Ziel-Mobiltelefons mit einer Mess-Basisstation zu schaffen, so dass im Anschluss daran die Mess-Basisstation an dem Ziel-Mobiltelefon unabhängig vom Netzbetrieb bestimmte Messungen und/oder Auswertungen vornehmen kann.

Die Erfindung wird bezüglich des Verfahrens durch die Merkmale des Anspruchs 1 und bezüglich des Systems durch die Merkmale des Anspruchs 13 gelöst. Die darauf bezogenen unabhängigen Patentansprüche enthalten vorteilhafte Weiterbildungen der Erfindung.

Der Erfindung liegt die Erkenntnis zugrunde, dass durch Zwischenschaltung einer Kontroll-Basisstation der gezielte Verbindungsaufbau mit der Mess-Basisstation in besonders einfacher Weise vermittelt werden kann. Dabei muss es sich bei der Kontroll-Basisstation nicht um eine physikalisch von der Mess-Basisstation getrennte Basisstation handeln, sondern die Funktionen der Kontroll-Basisstation und der Mess-Basisstation können zeitlich hintereinander in einer einzigen Basisstation durchgeführt werden.

Dabei wird zunächst auf der ursprünglichen Frequenz des Ziel-Mobiltelefons die Kontroll-Basisstation aktiviert, so dass das Ziel-Mobiltelefon mit der Kontroll-Basisstation eine Verbindung aufnimmt. Nachfolgend sendet die Kontroll-Basisstation ein bestimmtes Signal, welches das Ziel-Mobiltelefon veranlasst, sich eine neue Basisstation auf der Frequenz der Mess-Basisstation zu suchen. Anschließend wird die Mess-Basisstation aktiviert, so dass das Ziel-Mobiltelefon eine Verbindung mit der Mess-Basisstation aufnimmt .

Zwar ist es grundsätzlich denkbar, dass die Mess-Basisstation auf der gleichen Frequenz wie die Kontroll-Basisstation und somit auch auf der ursprünglichen Frequenz des Ziel-Mobiltelefons arbeitet. Im Rahmen der Erfindung ist es jedoch besonders vorteilhaft, wenn die Frequenz der Mess-Basisstation von der Frequenz der Kontroll-Basisstation und damit von der ursprünglichen Frequenz des Ziel-Mobiltelefons verschieden ist. Dadurch wird das Ziel-Mobiltelefon auf eine andere Frequenz geleitet, wo es unabhängig und ungestört vom Netzbetrieb untersucht werden kann oder auch durch Peilung geortet werden kann. Andere Mobiltelefone, welche sich gegebenenfalls auch temporär auf der Kontroll-Basisstation einloggen, erhalten von dieser keinen Befehl zur Suche einer neuen Basisstation auf der Frequenz der Mess-Basisstation und verbleiben somit bei der Kontroll-Basisstation. Nach Abschalten der Kontroll-Basisstation kehren diese zu einer Netz-Basisstation zurück.

Damit das Ziel-Mobiltelefon zur Kontroll-Basisstation wechselt, muss die Kontroll-Basisstation mit einer solchen Sendeleistung betrieben werden, dass sie am Ort des Ziel-Mobiltelefons mit einer höheren Feldstärke empfangen wird, als die übrigen Basisstationen und daher von dem Ziel-Mobiltelefon als vorteilhafte neue Basisstation erkannt wird.

Wenn die Kontroll-Basisstation mit einem anderen Bereichs-Code sendet als die umgebenden Netz-Basisstationen, so hat diese die Möglichkeit, von dem Ziel-Mobiltelefon dessen Identität durch Abfrage der IMEI (International Mobile Subscriber Identity) -Kennung zu ermitteln.

Ist ein bestimmtes zu der Kontroll-Basisstation wechselndes Mobiltelefon als Ziel-Mobiltelefon identifiziert worden, so wird dieses vorzugsweise durch Senden einer Nicht-Akzeptanz-Nachricht abgewiesen. Gleichzeitig wird als Broadcast-Information eine Liste alternativer, benachbarter Basisstationen mit deren jeweiliger Frequenz und im Fall von UMTS-Netzen auch dessen Scrambling-Code zur Verfügung gestellt. Bevorzugt findet sich auf dieser Liste jedoch nur ein Eintrag, nämlich der Mess-Basisstation, so dass das Ziel-Mobiltelefon nur eine einzige Alternative hat, nämlich zu der Mess-Basisstation zu wechseln. Sobald dieser Wechsel erfolgt ist, kann die Kontroll-Basisstation abgeschaltet werden, so dass die übrigen dort eingebuchten Mobiltelefone in den Netzbetrieb zurückkehren.

Natürlich ist es sinnvoll, dass die Kontroll-Basisstation und die Mess-Basisstation mit der gleichen Netzbetreiber-Kennung betrieben werden, die der Netzkennung der von dem Ziel-Mobiltelefon zuletzt benutzten Basisstation entspricht.

Ein Ausführungsbeispiel der Erfindung wird nachfolgend unter Bezugnahme auf die Zeichnung näher beschrieben. In der Zeichnung zeigen:
- Fig. 1: ein Ausführungsbeispiel des erfindungsgemäßes Systems zum Verbindungsaufbau eines Ziel-Mobiltelefons in einem Zustand, bei welchem das Ziel-Mobiltelefon sich noch im Netzbetrieb befindet;
- Fig. 2: das erfindungsgemäße System in einem Zustand, in welchem das Ziel-Mobiltelefon mit der Kontroll-Basisstation in Verbindung steht;
- Fig. 3: das erfindungsgemäße System in einem Zustand, in welchem das Ziel-Mobiltelefon mit der Mess-Basisstation in Verbindung steht;
- Fig. 4: eine schematische Darstellung des Verbindungsaufbaus;
- Fig. 5: eine schematische Darstellung der Signalisierung eines akzeptieren Wechsels zur Kontroll-Basisstation und
- Fig. 6: eine schematische Darstellung der Signalisierung eines abgewiesenen Wechsels zur Kontroll-Basisstation.

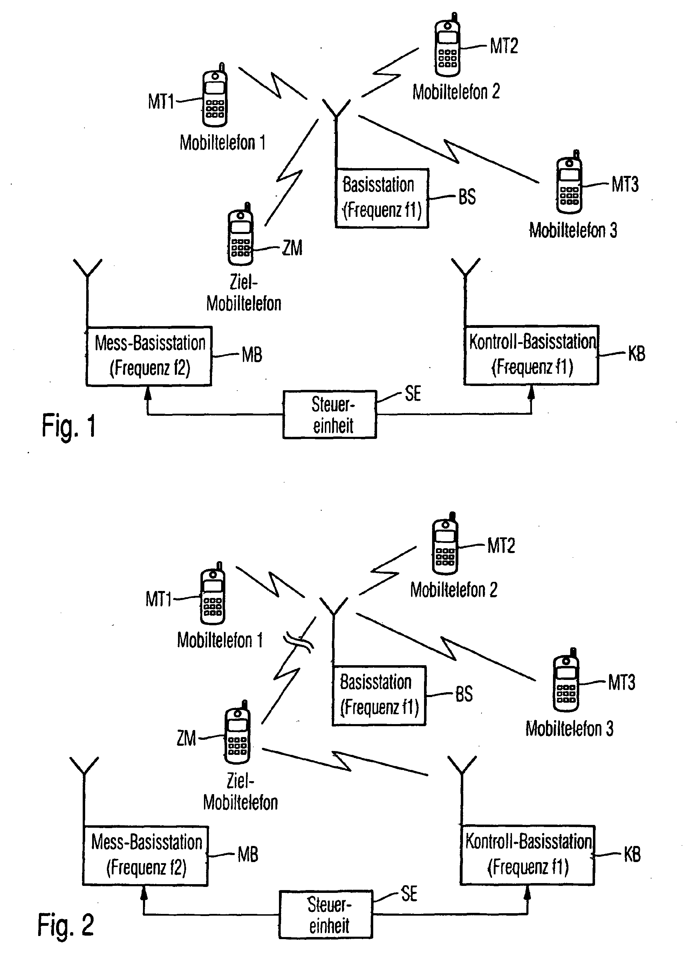

Die grundsätzliche Vorgehensweise des erfindungsgemäßen Verfahrens wird nachfolgend unter Bezugnahme auf die Figuren 1 bis 3 erläutert.

In Fig. 1 sind mehrere Mobiltelefone MT1, MT2, MT3 ZM, darunter das zu untersuchende Ziel-Mobiltelefon ZM, dargestellt, die mit einer bestimmten Basisstation BS des Mobilfunknetzes, welche auf der Frequenz f1 arbeitet, verbunden sind. Das erfindungsgemäße System besteht aus einer Kontroll-Basisstation KB, die im Ausführungsbeispiel auf der Frequenz f1 arbeitet, die mit der Frequenz f1 der Netz-Basisstation BS identisch ist, und einer Mess-Basisstation MB, die im dargestellten bevorzugten Ausführungsbeispiel auf einer Frequenz f2 arbeitet, die von der Frequenz f1 der Kontroll-Basisstation KB verschieden ist. Sowohl die Kontroll-Basisstation KB als auch die Mess-Basisstation MB werden von einer gemeinsamen Steuereinheit SE angesteuert. Bei der Steuereinheit SE kann es sich beispielsweise um einen Steuerrechner in Form eines Notebook oder dergleichen handeln. Die Kontroll-Basisstation und die Mess-Basisstation können bei einer realen Ausführung auch durch eine gemeinsame physikalische Basisstation gebildet werden, die zunächst die Funktion der Kontroll-Basisstation und später die Funktion der Mess-Basisstation implementiert.

Bei dem in Fig. 1 dargestellten ersten Zustand sind sowohl das Ziel-Mobiltelefon ZM, als auch die anderen am Netzbetrieb teilnehmenden Mobiltelefone MT1, MT2 und MT3 mit der Netz-Basisstation BS verbunden.

Beim in Fig. 2 dargestellten zweiten Zustand aktiviert die Steuereinheit SE die Kontroll-Basisstation KB, die mit der gleichen Netzbetreiber-Kennung auf der gleichen Frequenz f1 sendet, wie die Netz-Basisstation BS, auf welcher das Ziel-Mobiltelefon ZM zunächst eingeloggt ist. Wenn die Sendeleistung der Kontroll-Basisstation KB so groß ist, dass das Signal der Kontroll-Basisstation KB am Ort des Ziel-Mobiltelefons ZM mit einer größeren Feldstärke empfangen wird, als das Signal der Netz-Basisstation BS, wird das Ziel-Mobiltelefon ZM die Kontroll-Basisstation KB als geeignete Alternative zur aktuellen Netz-Basisstation BS einstufen. Dabei ist zu berücksichtigen, dass mit zunehmender Sendeleistung der Kontroll-Basisstation KB auch die Verbindung des Ziel-Mobiltelefons ZM mit der Netz-Basisstation BS gestört wird und somit ein Wechsel der Basisstation für das Ziel-Mobiltelefon ZM angezeigt ist.

Das Ziel-Mobiltelefon führt dabei eine sogenannte "Location Update"-Prozedur durch. Die entsprechende Anfrage von dem Ziel-Mobiltelefon ZM wird von der Kontroll-Basisstation KB jedoch abgelehnt. Dies veranlasst das Ziel-Mobiltelefon ZM nach alternativ geeigneten neuen Basisstationen zu suchen. Die meisten Mobilfunkstandards sehen dabei vor, dass jede Basisstation eine Liste geeigneter benachbarter Basisstationen aussendet. Wenn sich auf dieser Liste als einzige Eintrag die Mess-Basisstation mit der zugehörigen Frequenz f2 befindet, bleibt dem Ziel-Mobiltelefon ZM als einzige Alternative ein Wechsel zu dieser Mess-Basisstation MB.

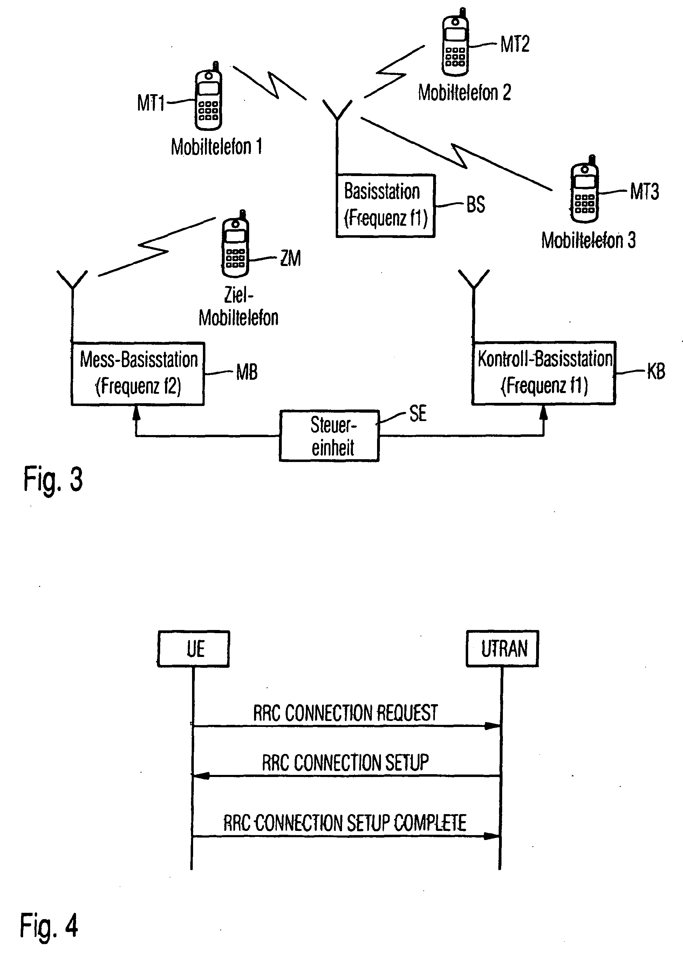

In Fig. 3 ist dargestellt, dass das Ziel-Mobiltelefon ZM nach Abweisung durch die Kontroll-Basisstation KB Verbindung mit der Mess-Basisstation MB auf der Frequenz f2 aufnimmt, die das Ziel-Mobiltelefon ZM schließlich akzeptiert. Die Kontroll-Basisstation KB kann dann abgeschaltet werden. Sollten sich außer dem Ziel-Mobiltelefon ZM auch noch weitere Mobiltelefone, beispielsweise das Mobiltelefon MT3, bei der Kontroll-Basisstation KB eingeloggt haben, so werden diese durch Abschalten der Kontroll-Basisstation KB wieder in den Netzbetrieb entlassen und können beispielsweise wie der mit der Netz-Basisstation BS Verbindung aufnehmen. Um zu Vermeiden, dass ein Mobiltelefon, beispielsweise MT3, welches nicht das Ziel-Mobiltelefon ZM ist, einen Wechsel zur Mess-Basisstation MB vornimmt, werden diese Mobiltelefone von der Kontroll-Basisstation akzeptiert und können sich bei dieser einloggen. Da die Kontroll-Basisstation KB nur für wenige Sekunden im Betrieb ist, wird dadurch das Verhalten dieser Mobiltelefone nicht beeinträchtigt, da sie bereits nach wenigen Sekunden wieder in den Netzbetrieb zurückgeführt werden.

Sobald das Ziel-Mobiltelefon ZM Verbindung mit der Mess-Basisstation MB aufgenommen hat, können die entsprechenden Messungen und Auswertungen vorgenommen werden. Beispielsweise können bestimmte Grund-Funktionen des Netzbetriebs überprüft werden oder die Übertragungsqualität beispielsweise anhand der Bitfehlerrate BER überprüft werden. Auch kann es sinnvoll sein, durch eine entsprechende Peilung die Lage des Ziel-Mobiltelefons ZM zu ermitteln.

Damit das Ziel-Mobiltelefon ZM versucht, eine Verbindung mit der Kontroll-Basisstation KB aufzubauen, muss das Signal der Kontroll-Basisstation KB mit einem ausreichend hohen Pegel (ausreichend hohe Feldstärke) bei dem Ziel-Mobiltelefon ZM ankommen. Ist dies der Fall, so ändert sich das sogenannte "Cell-Ranking", d. h. die Reihenfolge der in Frage kommenden benachbarten alternativen Basisstationen für das Ziel-Mobiltelefon ZM. Wenn die Feldstärke der Kontroll-Basisstation KB am Ort des Ziel-Mobiltelefons ZM so hoch ist, dass die Kontroll-Basisstation KB an erster Stelle auf dieser Liste steht, dann versucht das Ziel-Mobiltelefon ZM eine Verbindung zu der Kontroll-Basisstation KB aufzubauen und einen sogenannten "Location Update" durchzuführen.

Um dieses Verhalten des Ziel-Mobiltelefons ZM sicher zu gewährleisten, sendet die Kontroll-Basisstation KB einen anderen Bereichs-Code aus als die Netzbasisstation BS, auf welcher das Ziel-Mobiltelefon ZB vorher eingeloggt war. Im UMTS-Standard ist dieser Bereichs-Code als "CN common GSM-MAP NAS system information" bezeichnet und wird im sogenannten "System Information Block SIB 1" als Rundstrahlinformation (Broadcast Information) ausgestrahlt. Hierzu sei für das Beispiel des 3GPP UMTS-Standards auf 3GPP TS 25.331 V6.8.0 (2005-12), Technical Specification Group Radio Access Network; Radio Resource Control (RRC); Protocol Specification (Release 6), Kapitel 10.2.48.8.4 verwiesen.

Fig. 4 zeigt eine schematische Darstellung des Verbindungsaufbaus (RRC CONNECTION) beim UMTS-Standard. Ein in Fig. 4 als UE (User Equipment) bezeichnetes Mobiltelefon nimmt mit dem in Fig. 4 als UTRAN bezeichneten Mobilfunknetz durch die Anfrage "RRC CONNECTION REQUEST" Kontakt auf, welches mit "RRC CONNECTION SETUP" antwortet. Nach Abschluss der SETUP-Prozedur sendet das Mobiltelefon die Nachricht "RRC CONNECTION SETUP COMPLETE".

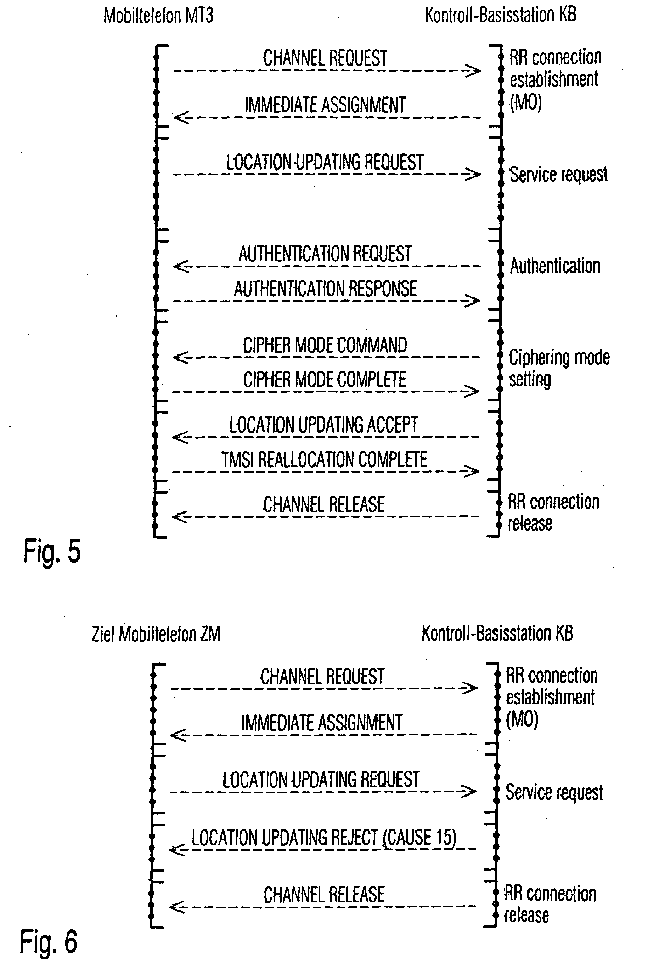

Wie vorstehend bereits beschrieben, akzeptiert die Kontroll-Basisstation KB ein Einloggen aller Mobiltelefone MT1-MT3, welche nicht das Ziel-Mobiltelefon ZM sind. Dabei wird eine erfolgreiche "Location update"-Prozedur gemäß dem Signalisierungsschema der Fig. 5 durchgeführt.

Beispielsweise möchte auch das Mobiltelefon MT3, das nicht das Ziel-Mobiltelefon ZM ist, auf der Kontroll-Basisstation KB einloggen und sendet dazu die Anfrage "CHANNEL REQUEST" (Kanal-Anfrage), die von der Kontroll-Basisstation KB mit der Nachricht "IMMEDIATE ASSIGNMENT" (sofortige Zuweisung) beantwortet wird. Das Mobiltelefon MT3 sendet dann die Nachricht "LOCATION UPDATING REQUEST". Die sich daran anschließenden Prozeduren der Authentifikation mit den Nachrichten "AUTHENTICATION REQUEST" und "AUTHENTICATION RESPONSE" sowie der Verschlüsselung mit den Nachrichten "CIPHER MODE COMMAND" und "CIPHER MODE COMPLETE" sind optional. Wenn die Kontroll-Basisstation KB wie im Fall des Mobiltelefons MT3 das Einloggen akzeptiert, so bestätigt sie das mit der Nachricht "LOCATION UPDATING ACCEPT". Die Mobilstation MT3 antwortet mit der Nachricht "TMSI REALLOCATION COMPLETE". Dabei steht TMSI für "Temporary Mobile Subscriber Identity", also eine temporäre Identifizierung des Mobiltelefons. Der Verbindungsabbau geschieht durch den optionalen Befehl "CHANNEL RELEASE".

Wenn der "Location Update" von der Mobilstation MT3 nicht akzeptiert wird, versucht gemäß gängiger Mobilfunkstandards (GSM, UMTS) die Mobilstation MT3 nach einer gewissen Zeit erneut, einen "Location Update" bei der Kontroll-Basisstation KB auszuführen. In jedem Fall wird aber durch die beschriebene Prozedur gemäß Fig. 5 verhindert, dass die Mobilstation MT3 versucht sich auf der Mess-Basisstation anzumelden.

Wie vorstehend beschrieben, wird das Ziel-Mobiltelefon ZM von der Kontroll-Basisstation KB nicht akzeptiert, um das Ziel-Mobiltelefon ZM zu veranlassen, bei der Mess-Basisstation MB auf der Frequenz f2 einzuloggen. Die zugehörige Signalisierung ist in Fig. 6 für den 3GPP UMTS Standard dargestellt. Die Ablehnung erfolgt durch die Nachricht "LOCATION UPDATING REJECT (CAUSE 15)" und ist bei diesem Standard in dem Dokument 3GPP TS 24.008 V6.11.0 (2005-12), Technical Specification Group Core Network and Terminals; Mobile radio interface Layer 3 specification; Core network protocols; Stage 3 (Release 6), Kapitel 4.4.4.7 definiert. Diese Nachricht veranlasst das Ziel-Mobiltelefon ZM sich eine andere Zelle einer anderen Basisstation des gleichen Netzbetreibers zu suchen. Das senden der "CHANNEL RELEASE" Nachricht ist optional.

Um die Suche nach einer neuen Zelle mit einer alternativ geeigneten Basisstation nicht unnötig zu verlängern, kann das Ziel-Mobiltelefon ZM beim 3GPP UMTS-Standard auf Informationen zurückgreifen, die im sogenannten "System Information Block SIB11" ausgestrahlt werden. Hierzu sei bezüglich des 3GPP UMTS-Standards auf 3GPP TS 25.331 V6.8.0 (2005-12), Technical Specification Group Radio Access Network; Radio Resource Control (RRC); Protocol Specification (Release 6), Kapitel 10.2.48.8.14 verwiesen. In dieser Rundstrahl-Information (Broadcast- Information) ist eine Liste derjenigen Nachbarzellen enthalten, die sich in der Nähe befinden. Diese Liste wird beim normalen Netzbetrieb von Mobiltelefonen herangezogen, wenn Messungen der Empfangsqualität von Signalen weiterer Basisstationen durchgeführt werden.

Um das Ziel-Mobiltelefon ZM auf die Frequenz f2 der Mess-Basisstation MB zu leiten, sendet die Kontroll-Basisstation KB auf der Frequenz f1 vorzugsweise als einzige Information über seine Nachbarzellen im Systeminformationsblock SIB11 die Parameter der Mess-Basisstation MB auf der Frequenz f2. Im Fall des UMTS-Standards, der nach dem CDMA-Prinzip (Code Division Multiple Access) arbeitet, umfassen diese Parameter neben der Frequenz auch den die Basisstation kennzeichnenden Scrambling Code. Dies führt dazu, dass das Ziel-Mobiltelefon ZM nach Durchführung der Messungen gemäß den im Systeminformationsblock SIB11 enthaltenen Informationen in jedem Fall versucht, sich bei der Mess-Basisstation MB anzumelden und dort eine "Location Update"-Prozedur durchzuführen. Dies führt schließlich zu dem beabsichtigten Einloggen des Ziel-Mobiltelefons ZM bei der Mess-Basisstation MB. Die Kontroll-Basisstation KB kann dann abgeschaltet werden.

Die Identifikation des Ziel-Mobiltelefons wird dadurch ermöglicht, dass die Kontroll-Basisstation KB einen anderen Bereichs-Code aussendet, als die Netz-Basisstation BS, bei welcher Ziel-Mobiltelefon ZM vorher eingeloggt war. Nachdem die Identität des Mobiltelefons innerhalb des gleichen Bereichs bekannt ist, ist bei einer Bereich-Überschreitung die Abfrage der Identität des sich neu einbuchenden Mobiltelefons erlaubt. Dabei wird die IMEI (International Mobile Station Equipment Identity)-Kennung ausgelesen. Beim UMTS-Standard erfolgt dies auf dem sogenannten "dedicated channel", d. h. mit einem nur diesem Mobiltelefon zugewiesenen Spreizcode. Dies kann auch zum Peilen des Ziel-Mobiltelefons ZM ausgenutzt werden, wenn kein Frequenzwechsel von der Frequenz f1 auf eine andere Frequenz f2 erfolgt. Hierzu muss der Spreizcode des Ziel-Mobiltelefons ZM dem Peiler bekannt sein und der Peiler somit signalselektiv arbeiten. In bestimmten Fällen kann dies gegenüber einem Frequenzwechsel vorteilhaft sein, insbesondere wenn keine freie Frequenz zur Verfügung steht.

Eine andere Alternative für die Peilung besteht darin, bei Dualmode-Mobiltelefonen das Ziel-Mobiltelefon ZM zunächst von einem UMTS-Betrieb auf einen GSM-Betrieb zu leiten und dann die Auswertung bzw. Ortung im GSM-Betrieb vorzunehmen. Nachdem bei GSM ein TDMA (Time Domain Multiple Access)-Verfahren zum Einsatz kommt, stören sich die Mobiltelefone bei der Ortung nicht untereinander und der Peiler kann die Signale verschiedener Mobiltelefone unterscheiden.

Die Ansprüche sind nicht auf das dargestellte Ausführungsbeispiel beschränkt.

## Patentansprüche

1. Verfahren zum Verbindungsaufbau eines ausgewählten Ziel-Mobiltelefons (ZM) mit einer Mess-Basisstation (MB), wobei die Mess-Basisstation (MB) an diesem ausgewählten Ziel-Mobiltelefon (ZM) Messungen durchführt und
wobei eine Steuereinheit (SE) die Mess-Basisstation (MB) sowie eine Kontroll-Basisstation (KB) ansteuert,
mit folgenden Verfahrensschritten:
- Aktivieren einer Kontroll-Basisstation (KB) auf der ursprünglichen Frequenz (f1) des Ziel-Mobiltelefons (ZM), so dass das Ziel-Mobiltelefon (ZM) eine Verbindung mit der Kontroll-Basisstation (KB) aufnimmt,
- Aussenden eines Signals von der Kontroll-Basisstation (KB), welches das Ziel-Mobiltelefon (ZM) veranlasst, sich eine neue Basisstation auf der Frequenz (f2) der Mess-Basisstation (MB) zu suchen, und
- Aktivieren der Mess-Basisstation (MB), so dass das Ziel-Mobiltelefon (ZM) eine Verbindung mit der Mess-Basisstation (MB) aufnimmt.

2. Verfahren nach Anspruch 1,
**dadurch gekennzeichnet,**
**dass** sich die Frequenz (f2) der Mess-Basisstation (MB) von der ursprünglichen Frequenz (f1) des Ziel-Mobiltelefons (ZM) unterscheidet.

3. Verfahren nach Anspruch 1 oder 2,
**dadurch gekennzeichnet,**
**dass** andere Mobiltelefone (MT1, MT2, MT3) als das ausgewählte Ziel-Mobiltelefon (ZM) von der Kontroll-Basisstation (KB) ein Signal erhalten, welches sie nicht veranlasst, ihre ursprüngliche Frequenz (f1) zu verlassen.

4. Verfahren nach einem der Ansprüche 1 bis 3,
**dadurch gekennzeichnet,**
**dass** die Kontroll-Basisstation (KB) nach Aktivieren der Mess-Basisstation (MB) deaktiviert wird.

5. Verfahren nach einem der Ansprüche 1 bis 4,
**dadurch gekennzeichnet,**
**dass** die Kontroll-Basisstation (KB) mit einer solchen Sendeleistung betrieben wird, dass sie am Ort der Ziel-Mobiltelefons (ZM) mit einer höheren Feldstärke als andere Basisstationen (BS) auf der gleichen Frequenz (f1) empfangen wird.

6. Verfahren nach einem der Ansprüche 1 bis 5,
**dadurch gekennzeichnet,**
**dass** die Kontroll-Basisstation (KB) mit einem anderen Bereichs-Code sendet als diejenige Basisstation (BS), mit der die Ziel-Mobiltelefons (ZM) vor Verbindungsaufnahme mit der Kontroll-Basisstation (KB) verbunden war.

7. Verfahren nach Anspruch 6,
**dadurch gekennzeichnet,**
**dass** der Bereichs-Code der "Location Area Code LAC" des GSM-Standards oder die "CN common GSM-MAP NAS system information" nach UMTS-Standard 3GPP TS 25.331 V6.8.0 (2005-12) Kap. 10.2.48.8.4 ist.

8. Verfahren nach einem der Ansprüche 1 bis 7,
**dadurch gekennzeichnet,**
**dass** das von der Kontroll-Basisstation (KB) ausgesandte Signal, welches das Ziel-Mobiltelefon (ZM) veranlasst, sich eine neue Basisstation zu suchen, eine
Nichtakzeptanz-Nachricht umfasst, die anzeigt, dass die Kontroll-Basisstation (KB) das Ziel-Mobiltelefon (ZM) nicht akzeptiert.

9. Verfahren nach Anspruch 8,
**dadurch gekennzeichnet,**
**dass** die Nichtakzeptanz-Nachricht die Nachricht "Location Update Reject (Cause15)" nach UMTS-Standard 3GPP TS 24.008 V6.11.0 (2005-12) Kap. 4.4.4.7 ist.

10. Verfahren nach einem der Ansprüche 1 bis 9,
**dadurch gekennzeichnet,**
**dass** die Kontroll-Basisstation (KB) dem Ziel-Mobiltelefon (ZM) eine Liste mit benachbarten Basisstationen und deren Frequenzen zur Verfügung stellt, die als Eintrag die Mess-Basisstation (MB) mit deren Frequenz (f2) enthält.

11. Verfahren nach Anspruch 10,
**dadurch gekennzeichnet,**
**dass** die Liste im Parameter-Block SIB11 nach UMTS-Standard 3GPP TS 25.331 V6.8.0 (2005-12) Kap. 10.2.48.8.14 enthalten ist.

12. Verfahren nach einem der Ansprüche 1 bis 11,
**dadurch gekennzeichnet,**
**dass** die Kontroll-Basisstation (KB) und die Mess-Basisstation (MB) mit einer Netzbetreiber-Kennung betrieben werden, die mit der Netzbetreiber-Kennung derjenigen Basisstation (BS) identisch ist, mit der das Ziel-Mobiltelefon (ZM) vorher in Verbindung stand.

13. System umfassend eine Kontroll-Basisstation (KB), eine Mess-Basisstation (MB), die an einem ausgewählten Ziel-Mobiltelefon (ZM) Messungen durchführt und eine Steuereinheit (SE), die die Mess-Basisstation (MB) sowie die Kontroll-Basisstation (KB)ansteuert, zum Durchführen eines gezielten Verbindungsaufbaus des ausgewählten Ziel-Mobiltelefons (ZM) mit der Mess-Basisstation (MB),
wobei die Steuereinheit (SE) die Kontroll-Basisstation (KB) auf der ursprünglichen Frequenz (f1) des Ziel-Mobiltelefons (ZM) so aktiviert, dass das Ziel-Mobiltelefon (ZM) eine Verbindung mit der Kontroll-Basisstation (KB) aufnimmt,
wobei die Steuereinheit (SE) die Kontroll-Basisstation (KB) so ansteuert, dass diese ein Signal aussendet, welches das Ziel-Mobiltelefon (ZM) veranlasst, sich eine neue Basisstation auf der Frequenz (f2) der Mess-Basisstation (MB) zu suchen und
wobei die Steuereinheit (SE) die Mess-Basisstation (MB) so aktiviert, dass das Ziel-Mobiltelefon (ZM) eine Verbindung mit der Mess-Basisstation (MB) aufnimmt.

14. System nach Anspruch 13,
**dadurch gekennzeichnet,**
**dass** sich die Frequenz (f2) der Mess-Basisstation (MB) von der ursprünglichen Frequenz (f1) des Ziel-Mobiltelefons (ZM) unterscheidet.

15. System nach Anspruch 13 oder 14,
**dadurch gekennzeichnet,**
**dass** andere Mobiltelefone (MT1, MT2, MT3) als das ausgewählte Ziel-Mobiltelefon (ZM) von der Kontroll-Basisstation (KB) ein Signal erhalten, welches sie nicht veranlasst, ihre ursprüngliche Frequenz (f1) zu verlassen.

16. System nach einem der Ansprüche 13 bis 15,
**dadurch gekennzeichnet,**
**dass** die Steuereinheit (SE) die Kontroll-Basisstation (KB) nach Aktivieren der Mess-Basisstation (MB) deaktiviert.

17. System nach einem der Ansprüche 13 bis 16,
**dadurch gekennzeichnet,**
**dass** die Steuereinheit (SE) die Kontroll-Basisstation (KB) so ansteuert, dass diese mit einer solchen Sendeleistung sendet, dass sie am Ort der Ziel-Mobiltelefons (ZM) mit einer höheren Feldstärke als andere Basisstationen (BS) auf der gleichen Frequenz (f1) empfangen wird.

18. System nach einem der Ansprüche 13 bis 17,
**dadurch gekennzeichnet,**
**dass** die Steuereinheit (SE) die Kontroll-Basisstation (KB) so ansteuert, dass diese mit einem anderen Bereichs-Code sendet als diejenige Basisstation (BS), mit der die Ziel-Basisstation (ZM) vor Verbindungsaufnahme mit der Kontroll-Basisstation (KB) verbunden war.

19. System nach Anspruch 18,
**dadurch gekennzeichnet,**
**dass** der Bereichs-Code der "Location Area Code LAC" des GSM-Standards oder die "CN common GSM-MAP NAS system information" nach UMTS-Standard 3GPP TS 25.331 V6.8.0 (2005-12) Kap. 10.2.48.8.4 ist.

20. System nach einem der Ansprüche 13 bis 19,
**dadurch gekennzeichnet,**
**dass** das von der Kontroll-Basisstation (KB) ausgesandte Signal, welches das Ziel-Mobiltelefon (ZM) veranlasst, sich eine neue Basisstation zu suchen, eine
Nichtakzeptanz-Nachricht umfasst, die anzeigt, dass die Kontroll-Basisstation (KB) die Ziel-Mobiltelefon (ZM) nicht akzeptiert.

21. System nach Anspruch 20,
**dadurch gekennzeichnet,**
**dass** die Nichtakzeptanz-Nachricht die Nachricht "Location Update Reject (Cause15)" nach UMTS-Standard 3GPP TS 24.008 V6.11.0 (2005-12) Kap. 4.4.4.7 ist.

22. System nach einem der Ansprüche 13 bis 21,
**dadurch gekennzeichnet,**
**dass** die Kontroll-Basisstation (KB) dem Ziel-Mobiltelefon (ZM) eine Liste mit benachbarten Basisstationen und deren Frequenzen zur Verfügung stellt, die als Eintrag die Mess-Basisstation (MB) mit deren Frequenz (f2) enthält.

23. System nach Anspruch 22,
**dadurch gekennzeichnet,**
**dass** die Liste im Parameter-Block SIB11 nach UMTS-Standard 3GPP TS 25.331 V6.8.0 (2005-12) Kap. 10.2.48.8.14 enthalten ist.

24. System nach einem der Ansprüche 13 bis 23,
**dadurch gekennzeichnet,**
**dass** die Steuereinheit (SE) die Kontroll-Basisstation (KB) und die Mess-Basisstation (MB) mit einer Netzbetreiber-Kennung betreibt, die mit der Netzbetreiber-Kennung derjenigen Basisstation (BS) identisch ist, mit der das Ziel-Mobiltelefon (ZM) vorher in Verbindung stand.

25. System nach einem der Ansprüche 13 bis 24,
**dadurch gekennzeichnet,**
**dass** die Kontroll-Basisstation (KB) und die Mess-Basisstation (MB) physikalisch als einzige Basisstation implementiert sind, welche die Steuereinheit (SE) mit unterschiedlicher Funktionalität zunächst als Kontroll-Basisstation (KB) und anschließend als Mess-Basisstation (MB) betreibt.

## Claims

1. A method for the connection setup between a selected target mobile telephone (ZM) and a measuring base station (MB),
wherein the measuring base station (MB) implements measurements on this selected target mobile telephone (ZM), and
wherein a control unit (SE) controls the measuring base station (MB) and a control base station (KB), comprising the following method steps:
- activation of a control base station (KB) at the original frequency (f1) of the target mobile telephone (ZM), so that the target mobile telephone (ZM) takes up a connection with the control base station (KB),
- transmission of a signal from the control base station (KB), which causes the target mobile telephone (ZM), to seek for itself a new base station on the frequency (f2) of the measuring base station (MB), and
- activation of the measuring base station (MB), so that the target mobile telephone (MB) takes up a connection with the measuring base station (MB).

2. The method according to claim 1,
**characterised in that**
the frequency (f2) of the measuring base station (MB) differs from the original frequency (f1) of the target mobile telephone (ZM).

3. The method according to claim 1 or 2,
**characterised in that**
other mobile telephones (MT1, MT2, MT3) than the selected target mobile telephone (ZM) receive from the control base station (KB) a signal, which does not cause them to leave their original frequency (f1).

4. The method according to any one of claims 1 to 3,
**characterised in that**
the control base station (KB) is deactivated after the activation of the measuring base station (MB).

5. The method according to any one of claims 1 to 4,
**characterised in that**
the control base station (KB) is operated with a transmission power such that it is received at the location of the target mobile telephone (ZM) with a higher field strength than other base stations (BS) on the same frequency (f1).

6. The method according to any one of claims 1 to 5,
**characterised in that**
the control base station (KB) transmits with a different region code than the base station (BS), with which the target mobile telephone (ZM) was connected before taking up the connection with the control base station (KB).

7. The method according to claim 6,
**characterised in that**
the region code is the "Location Area Code LAC" of the GSM standard or the "CN common GSM-MAP NAS system information" according to UMTS standard 3GPP TS 25.331,V6.8.0 (2005-12) Section 10.2.48.8.4.

8. The method according to any one of claims 1 to 7,
**characterised in that**
the signal transmitted by the control base station (KB), which causes the target mobile telephone (ZM) to seek for itself a new base station, comprises a non-acceptance message, which indicates that the control base station (KB) does not accept the target mobile telephone (ZM).

9. The method according to claim 8,
**characterised in that**
the non-acceptance message is the message "Location Update Reject (Cause15)" according to the UMTS standard 3GPP TS 24.008 V6.11.0 (2005-12) Section 4.4.4.7.

10. The method according to any one of claims 1 to 9,
**characterised in that**
the control base station (KB) provides the target mobile telephone (ZM) with a list with adjacent base stations and their frequencies, which contains as an entry the measuring base station (MB) with its frequency (f2).

11. The method according to claim 10,
**characterised in that**
the list is contained in the parameter block SIB11 according to the UMTS standard 3GPP TS 25.331 V6.8.0 (2005-12) Section 10.2.48.8.14.

12. The method according to any one of claims 1 to 11,
**characterised in that**
the control base station (KB) and the measuring base station (MB) are operated with a network operator code, which is identical to the network operator code of the base station (BS), with which the target mobile telephone (ZM) was previously connected.

13. A system comprising a control base station (KB), a measuring base station (MB), which implements measurements on a selected target mobile telephone (ZM) and a control unit (SE), which controls the measuring.base station (MB) and the control base station (KB), for the implementation of a targeted connection setup between the selected target mobile telephone (ZM) and the measuring base station (MB),
wherein the control unit (SE) activates the control base station (KB) at the original frequency (f1) of the target mobile telephone (ZM) in such a manner that the target mobile telephone (ZM) takes up a connection with the control base station (KB),
wherein the control unit (SE) controls the control base station (KB) in such a manner that the latter transmits a signal, which causes the target mobile telephone (ZM) to seek for itself a new base station on the frequency (f2) of the measuring base station (MB), and
wherein the control unit (SE) activates the measuring base station (MB) in such a manner that the target mobile telephone (MB) takes up a connection with the measuring base station (MB).

14. The system according to claim 13,
**characterised in that**
the frequency (f2) of the measuring base station (MB) differs from the original frequency (f1) of the target mobile telephone (ZM).

15. The system according to claim 13 or 14,
**characterised in that**
other mobile telephones (MT1, MT2, MT3) than the selected target mobile telephone (ZM) receive from the control base station (KB) a signal, which does not cause them to leave their original frequency (f1).

16. The system according to any one of claims 13 to 15,
**characterised in that**
the control unit (SE) deactivates the base station (KB) after the activation of the measuring base station (MB).

17. The system according to any one of claims 13 to 16,
**characterised in that**
the control unit (SE) controls the control base station (KB) in such a manner that the latter transmits with a transmission power such that it is received at the location of the target mobile telephone (ZM) with a higher field strength than other base stations (BS) on the same frequency (f1).

18. The system according to any one of claims 13 to 17,
**characterised in that**
the control unit (SE) controls the control base station (KB) in such a manner that the latter transmits with a different region code than the base station (BS), with which the target mobile telephone (ZM) was connected before taking up the connection with the control base station (KB).

19. The system according to claim 18,
**characterised in that**
the region code is the "Location Area Code LAC" of the GSM standard or the "CN common GSM-MAP NAS system information" according to UMTS standard 3GPP TS 25.331 V6.8.0 (2005-12) Section 10.2.48.8.4.

20. The system according to any one of claims 13 to 19,
**characterised in that**
the signal transmitted by the control base station (KB), which causes the target mobile telephone (ZM) to seek for itself a new base station, comprises a non-acceptance message, which indicates that the control base station (KB) does not accept the target mobile telephone (ZM).

21. The system according to claim 20,
**characterised in that**
the non-acceptance message is the message "Location Update Reject (Cause15)" according to the UMTS standard 3GPP TS 24.008 V6.11.0 (2005-12) Section 4.4.4.7.

22. The system according to any one of claims 13 to 21,
**characterised in that**
the control base station (KB) provides the target mobile telephone (ZM) with a list with adjacent base stations and their frequencies, which contains as an entry the measuring base station (MB) with its frequency (f2).

23. The system according to claim 22,
**characterised in that**
the list is contained in the parameter block SIB11 according to the UMTS standard 3GPP TS 25.331 V6.8.0 (2005-12) Section 10.2.48.8.14.

24. The system according to any one of claims 13 to 23,
**characterised in that**
the control unit (SE) operates the control base station (KB) and the measuring base station (MB) with a network operator code, which is identical to the network operator code of the base station (BS), with which the target mobile telephone (ZM) was previously connected.

25. The system according to any one of claims 13 to 24,
**characterised in that**
the control base station (KB) and the measuring base station (MB) are implemented physically as individual base stations, which the control unit (SE) operates with a different functionality initially as a control base station (KB) and then as a measuring base station (MB).

## Revendications

1. Procédé pour l'établissement d'une connexion d'un téléphone mobile cible (ZM) sélectionné à une station de base de mesure (MB), dans lequel la station de base de mesure (MB) effectue des mesures par rapport à ce téléphone mobile cible (ZM) sélectionné et dans lequel une unité de commande (SE) commande la station de base de mesure (MB) ainsi qu'une station de base de contrôle (KB), comportant les étapes suivantes de Procédé :
l'activation d'une station de base de contrôle (KB) sur une fréquence d'origine (f1) du téléphone mobile cible (ZM), de sorte que le téléphone mobile cible (ZM) établit une connexion avec la station de base de contrôle (KB),
l'émission d'un signal depuis la station de base de contrôle (KB), qui incite le téléphone mobile cible (ZM) à chercher une nouvelle station de base sur la fréquence (f2) de la station de base de mesure (MB), et
l'activation de la station de base de mesure (MB), de sorte que le téléphone mobile cible (ZM) établit une connexion avec la station de base de mesure (MB).

2. Procédé selon la revendication 1, **caractérisé en ce que**
la fréquence (f2) de la station de base de mesure (MB) se différencie de la fréquence d'origine (f1) du téléphone mobile cible (ZM).

3. Procédé selon la revendication 1 ou 2,
**caractérisé en ce que**
d'autres téléphones mobiles (MT1, MT2, MT3) que le téléphone mobile cible (ZM) sélectionné reçoivent un signal de la station de base de contrôle (KB), qui ne les incite pas à quitter leur fréquence d'origine (f1).

4. Procédé selon l'une des revendications 1 à 3,
**caractérisé en ce que**
la station de base de contrôle (KB) est désactivée après l'activation de la station de base de mesure (MB).

5. Procédé selon l'une des revendications 1 à 4,
**caractérisé en ce que**
la station de base de contrôle (KB) est activée avec une capacité d'émission de sorte qu'elle est reçue à l'endroit du téléphone mobile cible (ZM) avec une intensité plus élevée que d'autres stations de base (BS) sur la même fréquence (f1).

6. Procédé selon l'une des revendications 1 à 5,
**caractérisé en ce que**
la station de base de contrôle (KB) émet avec un autre code de zone que les stations de base (BS), auxquelles le téléphone mobile cible (ZM) était relié avant l'établissement d'une connexion avec la station de base de contrôle (KB).

7. Procédé selon la revendication 6, **caractérisé en ce que**
le code de zone du "Location Area Code LAC" du standard GSM ou la "CN common GSM-MAP NAS system information" est d'après le standard UMTS 3GPP TS 25.331 V6.8.0 (12/2005) Chap. 10.2.48.8.4.

8. Procédé selon l'une de revendication 1 à 7,
**caractérisé en ce que**
le signal émis par la station de base de contrôle (KB), qui incite le téléphone mobile cible (ZM) à chercher une nouvelle station de base, comprend une information de non acceptation, qui indique que la station de base de contrôle (KB) n'accepte pas le téléphone mobile cible (ZM).

9. Procédé selon la revendication 8, **caractérisé en ce que**
l'information de non acceptation est l'information "Location Update Reject (Cause15)" selon le standard UMTS 3GPP TS 24.008 V6.11.0 (12/2005) Chap. 4.4.4.7.

10. Procédé selon l'une de revendication 1 à 9,
**caractérisé en ce que**
la station de base de contrôle (KB) met à disposition du téléphone mobile cible (ZM) une liste des stations de base proches et leurs fréquences, qui comprend la station de base de mesure (MB) avec sa fréquence (f2) en tant qu'entrée.

11. Procédé selon la revendication 10, **caractérisé en ce que**
la liste est contenue dans le bloc de paramètre SIB11 selon le standard UMTS 3GPP TS 25.331 V6.8.0 (12/2005) Chap. 10.2.48.8.14.

12. Procédé selon l'une des revendications 1 à 11,
**caractérisé en ce que**
la station de base de contrôle (KB) et la station de base de mesure (MB) sont activées par une identification de gestionnaire de réseau, qui est identique à l'identification de gestionnaire de réseau de la station de base (BS) avec laquelle le téléphone mobile cible (ZM) était en relation auparavant.

13. Système comprenant une station de base de contrôle (KB), une station de base de mesure (MB), qui effectue des mesures par rapport à un téléphone mobile cible sélectionné (ZM), et une unité de commande (SE), qui commande la station de base de mesure (MB) et la station de base de contrôle (KB), pour effectuer l'établissement d'une connexion visée du téléphone mobile cible sélectionné (ZM) à la station de base de mesure (MB),
dans lequel l'unité de commande (SE) active la station de base de contrôle (KB) sur la fréquence d'origine (f1) du téléphone mobile cible (ZM), de sorte que le téléphone mobile cible (ZM) établit une connexion avec la station de base de contrôle (KB),
dans lequel l'unité de commande (SE) commande la station de base de contrôle (KB), de sorte que celle-ci émet un signal, qui incite le téléphone mobile cible (ZM) à chercher une nouvelle station de base sur la fréquence (f2) de la station de base de mesure (MB) et
dans lequel l'unité de commande (SE) active la station de base de mesure (MB), de sorte que le téléphone mobile cible (ZM) établit une connexion à la station de base de mesure (MB).

14. Système selon la revendication 13, **caractérisé en ce que**
la fréquence (f2) de la station de base de mesure (MB) se différencie de la fréquence d'origine (f1) du téléphone mobile cible (ZM).

15. Système selon la revendication 13 ou 14,
**caractérisé en ce que**
des téléphones mobiles (MT1, MT2, MT3) autres que le téléphone mobile cible sélectionné (ZM) reçoivent, de la station de base de contrôle (KB), un signal, qui ne les incite pas, à quitter leur fréquence d'origine (f1).

16. Système selon l'une des revendications 13 à 15,
**caractérisé en ce que**
l'unité de commande (SE) désactive la station de base de contrôle (KB) après activation de la station de base de mesure (MB).

17. Système selon l'une des revendications 13 à 16,
**caractérisé en ce que**
L'unité de commande (SE) commande la station de base de contrôle (KB), de sorte que celle-ci émet avec que une telle capacité d'émission, qu'elle est reçue à l'endroit du téléphone mobile cible (ZM) avec une intensité plus élevée que d'autres stations de base (BS) sur la même fréquence (f1).

18. Système selon l'une des revendications 13 à 17,
**caractérisé en ce que**
l'unité de commande (SE) commande l'unité de base de contrôle (KB) de sorte que celle-ci émet avec un autre code de zone que la station de base (BS), avec laquelle le téléphone mobile cible (ZM) était connecté avant l'établissement d'une connexion avec la station de base de contrôle (KB).

19. Système selon la revendication 18, **caractérisé en ce que**
le code de zone du "Location Area Code LAC" du standard GSM ou la "CN common GSM-MAP NAS system information" est selon le standard UMTS 3GPP TS 25.331 V6.8.0 (12/2005) Chap. 10.2.48.8.4.

20. Système selon l'une des revendications 13 à 19,
**caractérisé en ce que**
le signal émis par la station de base de contrôle (KB), qui incite le téléphone mobile cible (ZM), à chercher une nouvelle station de base, comporte une information de non acceptation, qui indique que la station de base de contrôle (KB) n'accepte pas le téléphone mobile cible (ZM).

21. Système selon la revendication 20, **caractérisé en ce que**
l'information de non acceptation est l'information "Location Update Reject (Cause15)" selon le standard UMTS 3GPP TS 24.008 V6.11.0 (12/2005) Chap. 4.4.4.7.

22. Système selon l'une des revendications 13 à 21,
**caractérisé en ce que**
la station de base de contrôle (KB) met à disposition du téléphone mobile cible (ZM) une liste des stations de base proches et leurs fréquences, qui contient la station de base de mesure (MB) avec sa fréquence (f2) en tant qu'entrée.

23. Système selon la revendication 22, **caractérisé en ce que**
la liste est contenue dans le bloc de paramètre SIB11 selon le standard UMTS 3GPP TS 25.331 V6.8.0 (12/2005) Chap. 10.2.48.8.4.

24. Système selon l'une des revendications 13 à 23,
**caractérisé en ce que**
l'unité de commande (SE) active la station de base de contrôle (KB) et la station de base de mesure (MB) avec une identification de gestionnaire de réseau, qui est identique à l'identification de gestionnaire de réseau de la station de base (BS) avec laquelle le téléphone mobile cible (ZM) était en connexion auparavant.

25. Système selon l'une des revendications 13 à 24, **caractérisé en ce que** le
la station de base de contrôle (KB) et la station de base de mesure (MB) sont réalisées physiquement en tant qu'une seule station de base, que l'unité de commande (SE) active avec une fonctionnalité différente tout d'abord en tant que station de base de contrôle (KB) et ensuite en tant que station de base de mesure (MB).
